Europäisches Patentamt

European Patent Office

Office européen des brevets

(19)

(11) Veröffentlichungsnummer: **0 305 636 B1**

# EUROPÄISCHE PATENTSCHRIFT

(12)

(45) Veröffentlichungstag der Patentschrift: **02.10.91**

(51) Int. Cl.⁵: **B60J 7/10**, B60J 7/06

(21) Anmeldenummer: **88105760.8**

(22) Anmeldetag: **12.04.88**

(54) **Zusammenschiebbares Verdeck für Lastkraftwagen und Anhänger.**

(30) Priorität: **29.08.87 DE 3728869**

(43) Veröffentlichungstag der Anmeldung:
**08.03.89 Patentblatt 89/10**

(45) Bekanntmachung des Hinweises auf die
Patenterteilung:
**02.10.91 Patentblatt 91/40**

(84) Benannte Vertragsstaaten:
**BE DE FR GB LU NL**

(56) Entgegenhaltungen:
**DE-A- 3 039 102       DE-A- 3 340 063**
**DE-A- 3 418 060       DE-C- 3 014 385**
**GB-A- 2 166 693       US-A- 4 285 539**

(73) Patentinhaber: **ED. Scharwächter GmbH &
Co.KG.
Hohenhagenerstrasse 26-28
W-5630 Remscheid 1(DE)**

(72) Erfinder: **Bremicker, Eduard
Büchelstrasse
W-5630 Remscheid(DE)**

(74) Vertreter: **Schön, Theodor, Patent- und Zivilingenieur
Sonnleiten 7
W-8311 Moosthenning 1(DE)**

## Beschreibung

Die Erfindung bezieht sich auf ein zusammenschiebbares Verdeck für LKW und Anhänger, bestehend aus zwei die Länge der Ladepritsche überspannenden, insbesondere von aufragenden Stützen getragenen, gegebenenfalls unterteilten Laufschienen und einer Vielzahl über paarweise gelenkig miteinander verbundene Stützstreben und Rollenwagen längsverfahrbar an den Laufschienen abgestützten, eine Plane tragenden Spriegeln sowie antreibbaren Mitteln zum Verfahren der Rollenwagen entlang der Laufschienen.

Ein solches beispielsweise aus der DE-C-30 14 385 bekanntes zusammenschiebbares Verdeck für Lastkraftwagen und Anhänger dient ganz grundsätzlich dazu, verhältnismäßig große Längen aufweisende Ladeflächen von Nutzfahrzeugen einerseits für das Beladen von oben möglichst vollständig freizugeben und andererseits während der Transportfahrt möglichst vollständig abzudecken, vor allem um feuchtigkeitsempfindliches Transportgut wie Schüttgüter und dergleichen gegen Witterungseinflüsse während der Transportfahrt zu schützen. Im täglichen Betrieb eines mit einem zusammenschiebbaren Verdeck ausgestatteten Nutzfahrzeuges ist es daher erforderlich, das Verdeck zum Beladen des Fahrzeuges zusammenzuschieben und für die Transportfahrt in seine gestreckte Abdeckstellung zu verbringen. Angesichts der häufig sehr großen Länge der Ladeflächen von Nutzfahrzeugen einerseits und dem Umstandes, daß das Verdeck relativ hochliegend angeordnet ist, ist es bei aller Leichtgängigkeit des Verdeckes, allein aufgrund dessen Gewichtes mit einem erheblichen Aufwand verbunden, dieses Verdeck von Hand zwischen seiner zusammengefalteten Freigabestellung und seiner gestreckten Schutzstellung hin und her zu bewegen. Mit der DE-C- 30 14 385 ist daher auch bereits ein vom Boden aus bedienbarer Antrieb für ein zusammenschiebbares Verdeck für Nutzfahrzeuge vorgeschlagen worden, bei welchem zum Öffnen und Schließen des Verdeckes ein vom Boden aus bedienbarer Seiltrieb mit einer beidendig an einer in Bedienhöhe an der einen, dem beweglichen Endspriegel gegenüberliegenden Laderaumstirnwand befestigten Seiltrommel verankerten Seilschlaufe, an der der bewegliche Endspriegel befestigt ist, vorgesehen ist. Dabei ist auch bereits vorgeschlagen worden, der Seiltrommel einen Antriebsmotor, beispielsweise einen Elektromotor, zuzuordnen, um das zusammenschieben bzw. Strecken des Verdeckes weiter zu erleichtern. Mit Hilfe dieser bekannten Antriebseinrichtung für ein zusammenschiebbares Verdeck legt sich das Verdeck praktisch ohne jeden körperlichen Kraftaufwand zwischen seiner zusammengeschobenen und seiner gestreckten Lage hin- und herbewegen, jedoch erfordert diese Antriebseinrichtung die Anbringung einer Seiltrommel an der einen Laderaumstirnwand, wodurch entweder der frei verfügbare Laderaum, oder aber die gesamt-nutzbare Fahrzeuglänge, wenn auch geringfügig, verringert wird. Ein weiterer Nachteil derartiger Antriebseinrichtungen für das zusammenschiebbare Verdeck besteht darin, daß ihre Anpassung an unterschiedliche Laderaumlängen verhältnismäßig aufwendig ist, da die Länge der Seilschlaufe jeweils mit der Länge des zu überdeckenden Laderaumes abgestimmt werden muß.

Bei einer anderen bekannten Bauart eines vom Boden aus antreibbaren zusammenschiebbaren Verdeckes für die Ladeflächen von Lastkraftwagen oder Anhängern ist vorgesehen, daß innerhalb der die Spriegel des Verdeckes abstützenden Laufschienen Spindeln verlagert sind, welche sich im Wesentlichen über die gesamte Ladeflächenlänge hin erstrecken und welchen eine an der einen Laderaumstirnwand angeordneten, manuell bedienbare Antriebseinrichtung zugeordnet ist. Mit diesen in den Laufschienen des zusammenschiebbaren Verdeckes angeordneten Spindeln wirken die Spriegel in den Laufschienen abstützenden, hier als Gleitstücke ausgebildeten Stützteile über ein innenliegend angeordnetes Muttergewinde zusammen, derart, daß durch den drehenden Antrieb der in den Laufschienen angeordneten Spindeln die einzelnen Spriegel des Verdeckes nacheinander zusammengeschoben werden, was einerseits den Vorteil hat, daß sich die Spindeln lediglich über einen Teil der gesamten Laderaumlänge hin zu erstrecken brauchen, und daß andererseits auch ein lediglich teilweises Öffnen des überdeckten Laderaumes problemlos möglich ist. Nachteilig an dieser bekannten Ausführungsform Antrieb am zusammenschiebbaren Verdeck selbst angeordnet ist, so daß für die Gestaltung des Antriebes keine Rücksicht auf die jeweils erforderliche Länge des zusammenschiebbaren Verdeckes genommen zu werden braucht. Das zusammenschiebbare Verdeck kann daher, unter der Voraussetzung, daß die Laufschienen des Verdeckes, wie allgemein üblich, aus einzelnen zusammensetzbaren Längenabschnitten bestehen, ohne jede Veränderung 'in gleichbleibender serienmäßiger Herstellung für alle vorkommenden Längen von zu überdeckenden Ladeflächen oder Laderäumen angewandt werden.

Hinsichtlich der Einzelausgestaltung, insbesondere des Antriebes des zusammenschiebbaren Verdeckes ergeben sich eine Reihe von Möglichkeiten, wobei jedoch zweckmäßigerweise stets vorgesehen ist, daß lediglich ein Antriebsmotor an lediglich einem der beiden dem ersten beweglichen Spriegel zugeordneten Rollenwagen angeordnet ist und die Antriebsglieder beider Rollenwagen durch mechanische Mittel, insbesondere eine Welle, miteinander gekoppelt sind. Dadurch wird ein zwangsweiser synchroner Antrieb der beiden Rollenwagen des ersten beweglichen Spriegels erreicht und somit jede Gefahr eines Verkantens des Verdeckes beim Vor-oder Zurückschieben ausgeschlossen. Um jedoch im Falle eines eines Antriebes für ein zusammenschiebbares Verdeck ist insbesondere der für die Herstellung und Anordnung und insbesondere auch den Einbau der Antriebsspindeln in die Laufschienen des Verdeckes erforder- liche Aufwand sehr hoch ist. Des weiteren ergibt sich bei einem solchen Antriebssystem eine gewisse Problematik daraus, daß die in den beiden Verdecklaufschienen angeordneten Spindeln zueinander synchron angetrieben werden müssen, um ein Verkanten der Spriegel während des Vor- und Zurückschiebens des Verdeckes zu vermeiden. Ein solcher synchroner Antrieb der beiden in den Laufschienen des zusammenschiebbaren Verdeckes angeordneten Spindeln kann nur von einer der beiden Stirnwände des Laderaumes aus und zentral erfolgen, derart, daß für den Antrieb der beiden Spindeln eine mit diesen, beispielsweise über Ketten oder vergleichbare schlupffrei wirkende Kraftübertragungsmittel zusammenwirkende Antriebseinrichtung vorgesehen ist. Die Antriebseinrichtung selbst kann im einfachsten Falle dann aus einer Handkurbel oder aber auch aus einem motorischen Antrieb bestehen.

Ausgehend von diesem Stand der Technik liegt der Erfindung die Aufgabe zugrunde, eine Antriebseinrichtung für ein zusammenschiebbares Verdeck für Lastkraftwagen oder Anhänger zu schaffen, welche bei problemloser Betätigbarkeit einerseits jede Beeinträchtigung des frei verfügbaren Laderaumes vermeidet, und welche auf der anderen Seite mit einem geringstmöglichen Aufwand herstell- und an verschiedene abzudeckende Laderaumlängen ohne jeglichen zusätzlichen Aufwand anpaßbar ist.

Ausgehend von einem zusammenschiebbaren Verdeck der eingangs genannten Bauweise wird diese Aufgabe erfindungsgemäß im Wesentlichen dadurch gelöst, daß an wenigstens einem der beiden dem ersten beweglichen Spriegel zugeordneten Rollenwagen ein Antriebsmotor angeordnet ist, dessen Antriebsglied mit der Laufschiene selbst oder mit an diese angeschlossenen Eingriffsmitteln in positiver Antriebsverbindung steht, wobei der Antriebsmotor fernsteuerbar ist. Der fernsteuerbare Antriebsmotor kann dabei aus einem Hilfsmotor beliebiger Bauart bestehen und mit an den beiden dem ersten beweglichen Spriegel zugeordneten Rollenwagen angeschlossenen Antriebsgliedern gekoppelt sein, wobei die Antriebsglieder dann jeweils entweder mit den Führungsschienen selbst oder mit an diese angeschlossenen Eingriffsmitteln zusammenwirken. Die Anordnung eines motorischen Antriebes am ersten beweglichen Spriegel des zusammenschiebbaren Verdeckes hat den Vorteil, daß das gesamte nutzbare Ladevolumen des Lastkraftwagens oder Anhängers nicht verringert wird und daß ferner der Ausfalles des Antriebsmotors das Verdeck auch mühelos von Hand vor- und zurückschieben zu können, ist in die mechanische Koppelung der Antriebsglieder der beiden Rollenwagen des ersten beweglichen Spriegels zweckmäßigerweise eine ausrichtbare Kupplung eingeschaltet.

Die den beiden Rollenwagen des ersten beweglichen Spriegels zugeordneten Antriebsglieder können im einfachsten Falle durch Reibräder gebildet sein, welche an den Laufschienen des Verdeckes abrollen. Zur Sicherstellung eines bestmöglichen Wirkungsgrades der Reibräder kann dabei vorgesehen sein, daß diese mit einer profilierten Bereifung versehen sind, was den Vorteil hat, daß bei einem etwa auftretenden Verschleiß lediglich die Bereifung der Antriebsglieder bzw. Reibräder ausgewechselt zu werden braucht, und daß ferner Laufschienen in der herkömmlichen Bauart ohne weitere Veränderung verwendet werden können.

Da die Laufschienen des Verdeckes üblicherweise aus gefalteten Blechmaterialabschnitten gebildet sind, kann weiterhin vorgesehen sein, daß diese mit einem profilierten Oberflächenbereich versehen sind, wobei dann die den beiden Rollenwagen des ersten beweglichen Spriegels des Verdeckes zugeordneten Antriebsglieder durch Formräder, beispielsweise Nockenräder oder Zahnräder, gebildet sind. In einer besonders einfachen, problemlos herstellbaren Ausführungsform ist daher vorgesehen, daß die den beiden Rollenwagen des ersten beweglichen Spriegels zugeordneten Antriebsglieder durch Nockenräder und die diesen zugeordneten Eingriffsmittel durch jeweils einen wellenförmig ausgebildeten Oberflächenbereich der beiden Laufschienen gebildet sind. Bei einer anderen bevorzugten Ausführungsform sind die den beiden Rollenwagen des ersten beweglichen Spriegels zugeordneten Antriebsglieder durch Zahnräder und diesen zugeordneten Eingriffsmittel durch jeweils einen verzahnten Oberflächenbereich der beiden Laufschienen gebildet. Bei Ausbildung der Antriebsglieder als Zahnräder kann weiterhin auch vorgesehen sein, daß die den Antriebsgliedern zugeordneten Eingriffsmittel durch seitlich an die Laufschienen angeschlossene Zahnschienen gebildet sind, welch letztere im einfachsten Fall durch einen einseitig stirnseitig verzahnten Blechmaterialabschnitt gebildet und mit den Laufschienen beispielsweise durch Verschraubung verbunden sein können.

In weiterer Ausgestaltung der Erfindung kann der an wenigstens einem der dem ersten beweglichen Spriegel zugeordneten Rollenwagen angeordnete motorische Antrieb wahlweise durch einen Elektro-, einen Hydraulik- oder einen Pneumatik-Motor gebildet sein, wobei für die Energieversorgung des am einen Rollenwagen des ersten beweglichen Spriegels angeordneten motorischen Antriebes eine faltbare Energieleitung vorgesehen ist. Dieser faltbaren, zweckmäßigerweise aus einem Schlauchpaar oder einer Flachbandleitung bestehenden Energiezuleitung sind zweckmäßigerweise jeweils eine eine kreisbogenförmig gewölbte Auflagefläche aufweisende, an jeweils einer der beiden einen Spriegel tragenden Stützstreben angeordnete Abstützungen zugeordnet. Für die Befestigung der Abstützungen für die Energieleitung an den Stützstreben ist zweckmäßigerweise eine Verschraubung vorgesehen, die in besonders bevorzugter Einzelausgestaltung gleichzeitig auch der Herstellung einer Gelenkverbindung zwischen den beiden einen Spriegel tragenden Stützstreben dient. Ferner ist vorgesehen, daß jeder Abstützung für die Energieleitung ein an der gleichen Stützstrebe befestigter Niederhalter zugeordnet ist. Gemäß einer weiteren bevorzugten Ausgestaltungsform der Erfindung kann auch vorgesehen sein, daß die Energieversorgung für einen als Elektromotor ausgebildeten, am einen Rollenwagen des ersten beweglichen Spriegels angeordneten Antriebsmotor als Fahrleitung ausgebildet und an der zugehörigen Laufschiene angeordnet ist. Die Fahrleitung kann dabei aus einem einfachen elektrischen Leiter bestehen, der an der zugehörigen Laufschiene des zusammenschiebbaren Verdeckes, beispielsweise mittels Klebung oder in sonstiger Weise isoliert verlegt und befestigt ist. Die Verbindung zwischen Fahrleitung und am Rollenwagen angeordneten Elektromotor erfolgt in bekannter Weise durch einen Stromabnehmerbügel.

Die Erfindung ist in der nachfolgenden Beispielsbeschreibung anhand einiger in der Zeichnung dargestellter Ausführungsbeispiele im Einzelnen beschrieben.

In der Zeichnung zeigt die

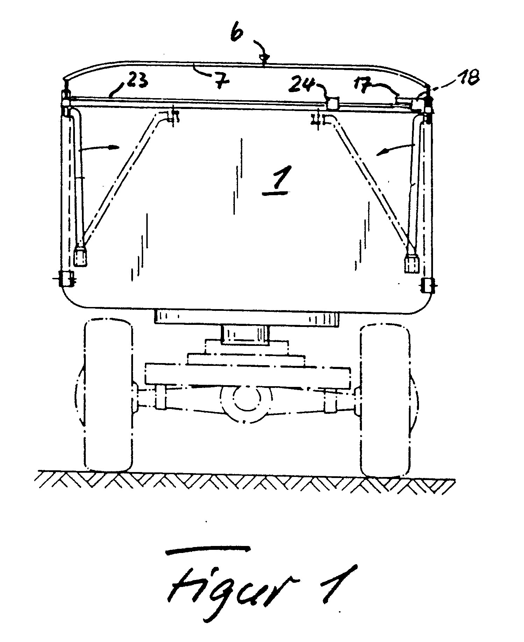

Figur 1    eine Rückansicht eines mit einem zusammenschiebbaren Verdeck ausgestatteten Lastkraftwagen;

Figur 2    eine ausschnittweise Darstellung der Rückansicht des Lastkraftwagens gemäß Figur 1 im vergrößerten Maßstab;

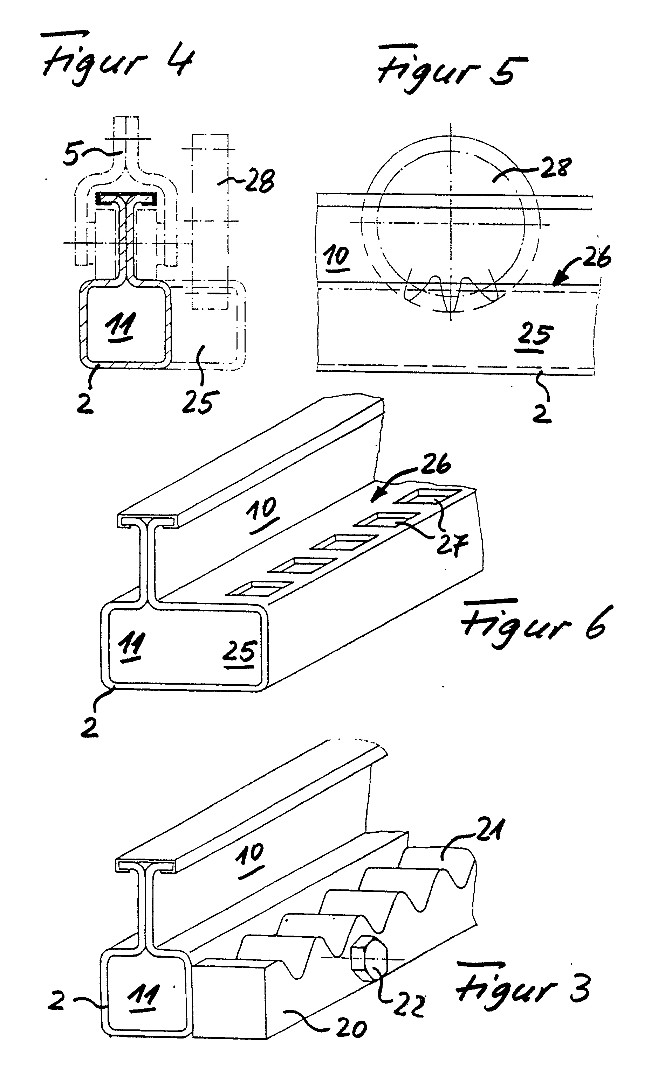

Figur 3    eine ausschnittweise, schaubildliche Darstellung der Laufschienen des zusammenschiebbaren Verdeckes gemäß Figur 2;

Figur 4    eine Stirnansicht einer anderen Gestaltungsform der Laufschienen eines zusammenschiebbaren Verdeckes;

Figur 5    eine Seitenansicht zu Figur 4,

Figur 6    eine abschnittweise schaubildliche Darstellung einer Laufschiene gemäß Figur 4 und 5,

Figur 7    eine ausschnittweise Seitenansicht eines zusammenschiebbaren Verdeckes gemäß Figur 2.

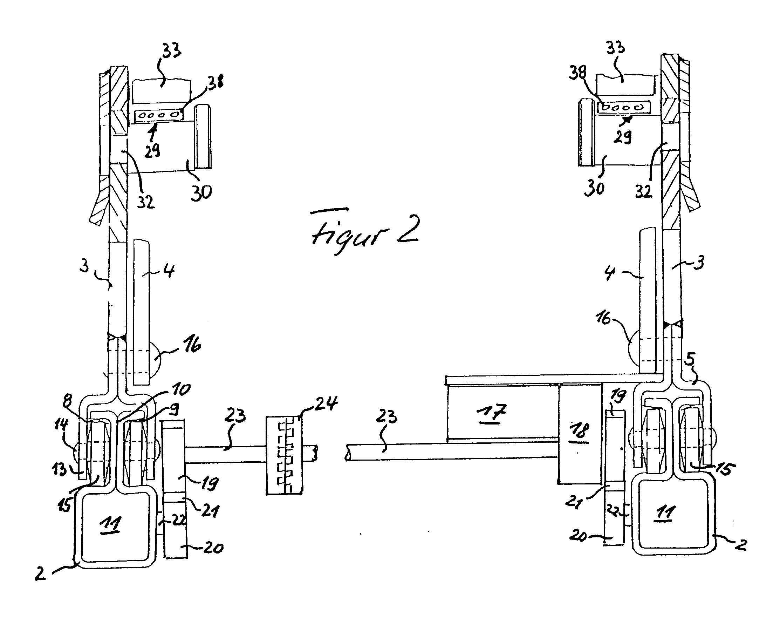

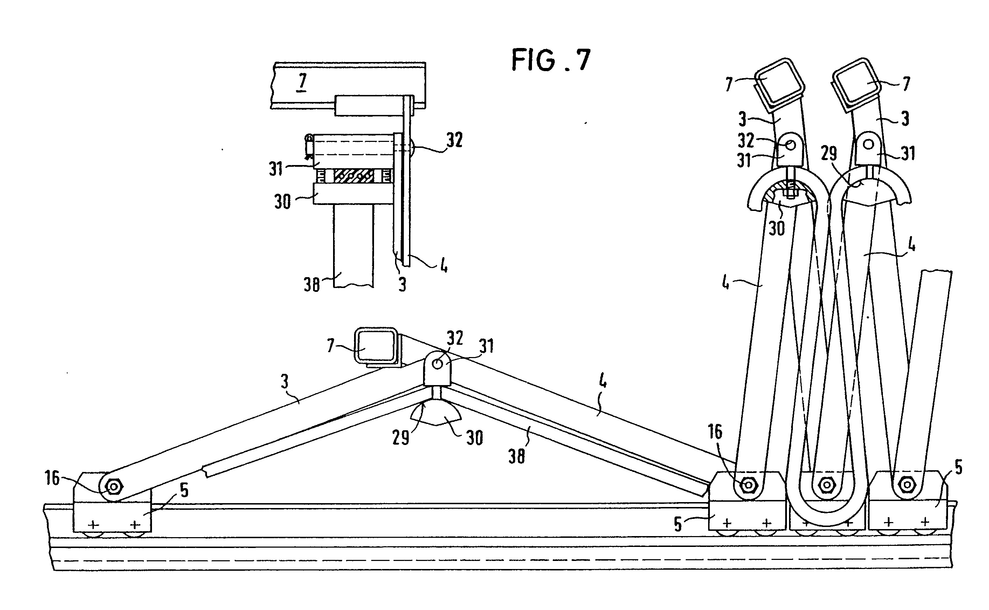

Oberhalb eines Laderaumes eines in der Zeichnung nicht im Einzelnen gezeigten Lastkraftwagens ist ein Schiebeverdeck angeordnet, welches aus zwei von aufragenden Stützen getragenen, die Laderaumlänge des Lastkraftwagens überspannenden Führungsschienen 2 und einer Vielzahl über paarweise gelenkig untereinander verbundene Stützstreben 3 und 4 sowie Rollenwagen 5 abstandsveränderlich auf den Laufschienen 2 abgestützten, eine Plane 6 tragenden Spriegeln 7 besteht. Die Laufschienen 2 sind im gezeigten Ausführungsbeispiel aus einem gefalteten Blechmaterial gebildet und weisen zwei nebeneinander liegende seitlich offene Führungsbahnen 8 und 9 sowie ein geschlossenes Tragprofil 11 ausgebildet sind. Dei Rollenwagen 5 sind in ihrem unteren Teil 12 gabelförmig ausgebildet und über ihren an Gabelschenkeln 13 mittels Zapfen 14 innenliegend angeordnete Rollen 15 in den offenen Führungsbahnen 8 und 9 der Laufschienen 2 abgestützt. Dabei ist jeder der Rollenwagen 5 über jeweils zwei Paare von Rollen 15 an den Laufschienen 2 abgestützt. An den Rollenwagen 5 sind andererseits die Verdecksspriegel 7 tragenden Stützstreben 3 und 4 über mit Zapfen 16 angelehnt. An den einen der beiden den beweglichen Endspriegel 7 tragenden Rollenwagen 5 ist, wie insbesondere aus der Darstellung der Figur 2 ersichtlich, ein durch einen Elektromotor 17 gebildeter Antriebsmotor samt nachgeschaltetem Untersetzungsgetriebe 18 angeschlossen. Über das nachgeschaltete Untersetzungsgetriebe 18 treibt der Elektromotor 17 ein als Zahnrad 19 ausgebildetes Antriebsglied an, welchem ein als Zahnschiene 20 ausgebildetes Eingriffsglied zugeordnet ist. Die Zahnschiene 20 ist dabei bei dem in der Figur 2 dargestellten Ausführungsbeispiel durch einen einfachen einseitig mit einem Zahnprofil 21 versehenen Blechmaterialstreifen gebildet und über Schraubenbolzen 22 seitlich an der Laufschiene 2 befestigt. An den der gegenüberliegenden Laufschiene 2 zugeordneten Rollenwagen 5 des ersten beweglichen Spriegels 7 ist ein gleichfalls als Zahnrad 19 ausgebildetes Antriebsglied angeschlossen, welches mit einer an die entsprechende Laufschiene 2 über Schraubenbolzen 22 angeschlossenen Zahnschiene 20 zusammenwirkt. Die beiden, mit den Zahnschienen 20 zusammenwirkenden Zahnräder 19 sind im gezeigten Ausführungsbeispiel untereinander und mit dem als Elektromotor ausgebildeten motorischen Antrieb 17 über eine starre mechanische Antriebswelle 23 verbunden. In die Antriebswelle 23 ist eine lösbare Kupplung 24 eingeschaltet, die bei einem Ausfall des Elektromotors 17 ein Unterbrechen der zwangsweisen Antriebskupplung der beiden Zahnräder 19 ermöglicht. Bei dem in den Figuren 4 bis 6 dargestellten Ausführungsbeispiel ist vorgesehen, daß Eingriffsmittel für die an den Rollenwagen 5 des ersten beweglichen Spriegels 7 angeordneten Antriebsglieder mit den Laufschienen 2 einteilig ausgebildet sind, wobei die Laufschienen 2 an ihrem Tragprofil 11 eine seitlich angeschlossene Erweiterung 25 aufweisen, deren Oberseite als Lochschiene 26 ausgebildet ist. Mit den Lochausnehmungen 27 der Lochschiene 26 wirken die als Zahnräder 28 ausgebildeten Antriebsgslieder zusammen. Diese Ausführungsform zeichnet sich insbesondere dadurch aus, daß für das Anbringen der Eingriffsmittel an den Laufschienen 11 weder zusätzliche noch ein zusätzlicher Montageaufwand erforderlich ist.

Die Energieversorgung des als Elektromotor ausgebildeten Antriebsmotors 17 erfolgt im gezeigten Ausführungsbeispiel mittels eines Flachbandkabels 28, welches an jeweils der den Spriegel 7 tragenden Stützstrebe 4 über eine kreisbogenförmig gewölbte Auflagefläche 29 aufweisende Abstützungen 30 aufgehängt ist. Den Abstützungen 30 ist bezüglich des Energiezuleitungskabels 28 gegenüberliegend jeweils ein Niederhalter 31 zugeordnet, über welchen die Abstützungen 30 gleichzeitig auch an die Stützstrebe 4 angeschlossen sind. Für den Anschluß der Abstützungen 30 samt der Niederhalter 31 wird der für die gelenkige Verbindung der beiden Stützstreben 3 und 4 ohnehin vorhandene Schraubenbolzen 32 verwendet, welcher über seinen verlängerten Schaftteil 33 gleichzeitig auch die Abstützung 30/31 trägt.

## Patentansprüche

1. Zusammenschiebbares Verdeck für LKW und Anhänger, bestehend aus zwei die Länge der Ladefläche bzw. des Laderaumes überspannenden, insbesondere von aufragenden Stützen getragenen, gegebenenfalls unterteilten Laufschienen und einer Vielzahl über paarweise gelenkig miteinander verbundene Stützstreben (3,4) und Rollenwage (5) längs verfahrbar an den Laufschienen abgestützten, eine Plane (6) tragenden Spriegeln (7) sowie antreibbaren Mitteln zum Verfahren der Rollenwagen (5) entlang der Laufschienen, dadurch gekennzeichnet, daß an wenigstens einem der beiden dem ersten beweglichen Spriegel (7) zugeordneten Rollenwagen (5) ein Antriebsmotor (17) angeordnet ist, dessen Antriebsglied (19 bzw. 28) mit den Laufschiene (2) selbst oder mit an diese angeschlossenen Eingriffsmitteln (20 bzw. 26) in positiver Antriebsverbindung steht, wobei der Antriebsmotor fernsteuerbar ist.

2. Verdeck nach Anspruch 1, dadurch gekennzeichnet, daß die beiden dem ersten beweglichen Spriegel (7) zugeordneten Rollenwagen (5) jeweils mit einem Antriebsglied (19 bzw. 28) ausgestattet sind, wobei ein Antriebsmotor (17) an lediglich einem der beiden dem ersten beweglichen Spriegel (7) zugeordneten Rollenwagen (5) angeordnet ist, und die Antriebsglieder (19 bzw. 28) beider Rollenwagen (5) durch eine Antriebswelle (23) miteinander gekoppelt sind.

3. Verdeck nach Anspruch 1 und 2, dadurch gekennzeichnet, daß in die die Antriebsglieder (19 bzw. 28) der beiden dem ersten beweglichen Spriegel (7) zugeordneten Rollenwagen (5) verbindende Antriebswelle (23) eine ausrückbare Kupplung (24) eingeschaltet ist.

4. Verdeck nach Anspruch 1 bis 3, dadurch gekennzeichnet, daß die den beiden Rollenwagen (5) des ersten beweglichen Spriegels (7) zugeordneten Antriebsglieder durch Reibräder gebildet sind, die an den Laufschienen abrollen.

5. Verdeck nach Anspruch 1 bis 4, dadurch gekennzeichnet, daß die die Antriebsglieder der beiden dem ersten Spriegel (7) zugeordneten Rollenwagen (5) bildenden Reibräder mit einer profilierten Bereifung versehen sind.

6. Verdeck nach Anspruch 1 bis 3, dadurch gekennzeichnet, daß die den beiden Rollenwagen (5) des ersten beweglichen Spriegels (7) zugeordneten Antriebsglieder durch Nockenräder und die diesen zugeordneten Eingriffsmittel durch jeweils einen wellenförmigen Oberflächenbereich der beiden Laufschienen (2) gebildet sind.

7. Verdeck nach Anspruch 1 bis 3, dadurch gekennzeichnet, daß die den beiden Rollenwagen (5) des ersten beweglichen Spriegels (7) zugeordneten Antriebsglieder durch Zahnräder (19 bzw. 28) und die diesen zugeordneten Eingriffsmittel durch jeweils einen verzahnten Oberflächenbereich der beiden Laufschienen (2) gebildet sind.

8. Verdeck nach Anspruch 1 bis 3, dadurch gekennzeichnet, daß die den beiden Rollenwagen (5) des ersten beweglichen Spriegels (7) zugeordneten Antriebsglieder als Zahnräder (19) ausgebildet und die diesen zugeordneten Eingriffsmittel durch jeweils einen als Lochschiene (26) ausgebildeten Oberflächenbereich der beiden Laufschienen (2) gebildet sind.

9. Verdeck nach Anspruch 1 bis 3, dadurch gekennzeichnet, daß die den beiden Rollenwagen (5) des ersten beweglichen Spriegels zugeordneten Antriebsglieder als Zahnräder (19) ausgebildet und die diesen zugeordneten Eingriffsmittel durch seitlich an die Laufschienen (2) angeschlossene Zahnschienen (20) gebildet sind.

10. Verdeck nach einem oder mehreren der vorausgehenden Ansprüche 1 bis 9, dadurch gekennzeichnet, daß der an wenigstens einem der dem ersten beweglichen Spriegel zugeordneten Rollenwagen (5) angeordnete Antriebsmotor durch einen Elektro- oder Hydraulikbzw. Pneumatik-Motor gebildet ist.

11. Verdeck nach Anspruch 10, dadurch gekennzeichnet, daß für die Energieversorgung des an einem Rollenwagen (5) des ersten beweglichen Spriegels (7) angeordneten Antriebsmotors (17) eine faltbare Energieleitung (38) vorgesehen ist.

12. Verdeck nach Anspruch 11, dadurch gekennzeichnet, daß der faltbaren Energieleitung (38) jeweils eine eine kreisbogenförmig gewölbte Auflagefläche (29) aufweisende, an einer der beiden Stützstreben (3 oder 4) befestigte Abstützung (30) zugeordnet ist.

13. Verdeck nach Anspruch 11 und 12, dadurch gekennzeichnet, daß die Abstützungen für die Energieleitung (38) jeweils zusammen mit der Gelenkverbindung (32) zweier einem Spriegel zugeordneter Stützstreben (3 und 4) verschraubt sind.

14. Verdeck nach Anspruch 11 bis 13, dadurch gekennzeichnet, daß jeder Abstützung (30) für die Energieleitung (38) ein an der den Spriegel (7) tragenden Stützstrebe (4) angeordneter Niederhalter (31) zugeordnet ist.

15. Verdeck nach Anspruch 10, dadurch gekennzeichnet, daß die Energieversorgung für einen als Elektromotor (17) ausgebildeten, am einen Rollenwagen (5) des ersten beweglichen Spriegels (7) angeordneten Antriebsmotor als Fahrleitung ausgebildet und an der zugehörigen Laufschiene (2) angeordnet ist.

16. Verdeck nach Anspruch 15, dadurch gekennzeichnet, daß die als Energieversorgung für den als Elektromotor ausgebildeten Antriebsmotor (17) durch einen an der einen Laufschiene (2) mittels Klebung oder in sonstiger isolierter Weise befestigten elektrischen Leiter gebildet ist.

## Claims

1. Telescopic hood for goods vehicles and trailers, consisting of two rails extending over the length of the carrying area or carrying space, especially supported by upstanding columns and possibly subdivided, and of a plurality of hood supports (7), carrying a tarpaulin (6) and supported to traverse on the rails by steadying struts (3, 4), articulated together in pairs, and wheeled trolleys (5), and also drivable means for traversing the wheeled trolleys (5) along the rails, characterized in that, on at least one of the two wheeled trolleys (5), associated with the first movable hood support (7), a drive motor (17) is mounted, the drive element (19, 28 respectively) of which is in positive driving connection with the rail (2) itself or with engagement means (20, 26 respectively) attached to this rail, the drive motor being remotely controllable.

2. Hood according to Claim 1, characterized in that the two wheeled trolleys (5) associated with the first movable hood support (7) are each equipped with a drive element (19, 28 respectively), a drive motor (17) being mounted solely on one of the two wheeled trolleys (5) associated with the first movable hood support (7), and the drive elements (19, 28 respectively) of the two wheeled trolleys (5) are coupled together by a drive shaft (23).

3. Hood according to Claims 1 and 2, characterized in that a disengageable coupling (24) is incorporated into the drive shaft (23), which connects together the drive elements (19, 28 respectively) of the two wheeled trolleys (5) associated with the first movable hood support (7).

4. Hood according to Claims 1 to 3, characterized in that the drive elements associated with the two wheeled trolleys (5) of the first movable hood support (7) are formed of friction wheels which run on the rails.

5. Hood according to Claims 1 to 4, characterized in that the friction wheels constituting the drive elements for the two wheeled trolleys (5) associated with the first hood support (7) are provided with profiled tyres.

6. Hood according to Claims 1 to 3, characterized in that the drive elements associated with the two wheeled trolleys (5) of the first movable hood support (7) are formed of cam wheels and the engagement means associated with the latter are formed each of an undulating surface region of the two rails (2).

7. Hood according to Claims 1 to 3, characterized in that the drive elements associated with the two wheeled trolleys (5) of the first movable hood support (7) are formed of gear wheels (19, 28 respectively) and the engagement means associated with the latter are each formed of a toothed surface region of the two rails (2).

8. Hood according to Claims 1 to 3, characterized in that the drive elements associated with the two wheeled trolleys (5) of the first movable hood support (7) are formed as gear wheels (19), and the engagement means associated with the latter are each formed of a surface region of the two rails (2) formed as a perforated rail (26).

9. Hood according to Claims 1 to 3, characterized in that the drive elements associated with the two wheeled trolleys (5) of the first movable hood support are formed as gear wheels (19), and the engagement means associated with the latter are formed by toothed rails (20) attached laterally to the rails (2).

10. Hood according to one or more of the preceding Claims 1 to 9, characterized in that the drive motor mounted on at least one wheeled trolley (5), associated with the first movable hood support, is formed of an electric motor or hydraulic or pneumatic motor.

11. Hood according to Claim 10, characterized in that, for the energy supply to the drive motor (17) mounted on one wheeled trolley (5) of the first movable hood support (7), a foldable supply line (38) is provided.

12. Hood according to Claim 11, characterized in that a bearing support (30), having a circular arc-shaped, convex bearing surface (29) and fixed in each case to one of the two steadying struts (3 or 4), is associated with the foldable supply line (38).

13. Hood according to Claims 11 and 12, characterized in that the bearing supports for the supply line (38) are each screwed to the articulated connection (32) of two steadying struts (3 and 4) associated with a hood support.

14. Hood according to Claims 11 to 13, characterized in that a holding-down element (31), mounted on the steadying strut (4) carrying the hood support (7), is associated with each bearing support (30) for the energy supply line (38).

15. Hood according to Claim 10, characterized in that the energy supply for a drive motor constructed as an electric motor (17) and mounted on the one wheeled trolley (5) of the first movable hood support (7), is constructed as a trolley wire and is mounted on the associated rail (2).

16. Hood according to Claim 15, characterized in that the energy supply for the drive motor (17) constructed as electric motor is formed by an electrical conductor fixed to the one rail (2) by gluing or in some other insulated manner.

**Revendications**

1. Capote repliable pour camions et remorques qui se compose de:
   - deux rails de roulement (2) s'étendant sur toute la longueur de la plateforme ou du compartiment de chargement, portés par des supports dressés et, en tant que de besoin subdivisés,
   - une multitude d'arceaux (7) portant une bâche (6) qui sont déplaçables longitudinalement dans les rails de roulement (2) grâce à des chariots roulants (5) et des paires d'entretoises (3), (4) articulées,
   - des moyens pour actionner le déplacement des chariots roulants (5) dans les rails de roulement,
   *caractérisée en ce que* au moins un des chariots roulants (5) associés au premier arceau déplaçable (7), comporte un moteur de commande (17) pouvant être actionné à distance, dont l'élément d'entraînement (19), (28) coopère avec les rails de roulement eux-mêmes ou avec des moyens d'engrènement (29), (26) associés auxdits rails de roulement.

2. Capote repliable selon la revendication 1 *caractérisée en ce que* les deux chariots roulants (5) associés au premier arceau déplaçable (7) comportent un élément d'entraînement (19), (28) alors que le moteur de commande (17) est prévu sur un seul des deux chariots roulants (5) du premier arceau déplaçable (7), les éléments d'entraînement (19), (28) des deux chariots roulants (5) étant couplés par un arbre menant (23).

3. Capote repliable selon les revendications 1 et 2 *caractérisée par* un embrayage (24) disposé sur l'arbre menant (23) qui relie les éléments d'entraînement (19), (28) des deux chariots roulants (5) associés au premier arceau déplaçable (7).

4. Capote repliable selon les revendications 1 à 3 *caractérisée en ce que* les éléments d'entraînement associés aux deux chariots roulants (5) du premier arceau déplaçable (7) sont constitués de galets de friction qui se meuvent sur les rails de roulement (2).

5. Capote repliable selon les revendications 1 à 4 *caractérisée en ce que* les galets de friction constituant l'élément d'entraînement des chariots roulants (5) du premier arceau déplaçable (7) sont pourvus de bandages à profil.

6. Capote repliable selon les revendications 1 à 3 *caractérisée en ce que* les éléments d'entraînement associés aux deux chariots roulants (5) du premier arceau déplaçable (7) sont constitués de pignons de distribution et *en ce que* les moyens d'engrènement coopérant avec lesdits pignons de distribution sont constitués d'une surface ondulée des deux rails de roulement (2).

7. Capote repliable selon les revendications 1 à 3 *caractérisée en ce que* les éléments d'entraînement associés aux deux chariots roulants (5) du premier arceau déplaçable (7) sont constitués de roues dentées (19), (28) et *en ce que* les moyens d'engrènement coopérant avec lesdites roues dentées sont constitués d'une surface dentée des deux rails de roulement (2).

8. Capote repliable selon les revendications 1 à 3 *caractérisée en ce que* les éléments d'entraînement associés aux deux chariots roulants (5) du premier arceau déplaçable (7) sont constitués de roues dentées (19) et *en ce que* les moyens d'engrènement coopérant avec lesdites roues dentées sont constitués d'une surface perforée des deux rails de roulement (2).

9. Capote repliable selon les revendications 1 à 3 *caractérisée en ce que* les éléments d'entraînement associés aux deux chariots roulants (5) du premier arceau déplaçable (7) sont constitués de roues dentées (19) et *en ce que* les moyens d'engrènement coopérant avec lesdites roues dentées sont constitués de crémaillères (20) assemblées latéralement avec les rails de roulement (2).

10. Capote repliable selon une ou plusieurs des revendications précédentes *caractérisée en ce que* le moteur de commande (17) disposé sur au moins l'un des chariots roulants (5) associés au premier arceau déplaçable (7), est un moteur électrique, un moteur hydraulique ou un moteur pneumatique.

11. Capote repliable selon la revendication 10 *caractérisée par* une conduite électrique (38) pliable pour le moteur de commande (17) disposé sur l'un des chariots roulants (5) associés au premier arceau déplaçable.

12. Capote repliable selon la revendication 11 *caractérisée en ce que* la conduite électrique pliable (38) est associé à un élément d'appui (30) fixé sur l'une des entretoises (3), (4) et présentant une surface d'appui (29) bombée en arc de cercle.

13. Capote repliable selon les revendications 11 et 12 *caractérisé en ce que* les éléments d'appui des conduites électriques (38) sont solidarisés à l'articulation (32) qui assemble les entretoises (3), (4) coopérant avec chaque arceau.

14. Capote repliable selon les revendications 11 à 13 *caractérisée par* un portique (31) associé à chaque élément d'appui (30) de la conduite électrique (38) et disposé sur l'entretoise (4) portant l'arceau (7).

15. Capote repliable selon la revendication 10 *caractérisée en ce que* l'alimentation en énergie du moteur de commande (17) constitué d'un moteur électrique et disposé sur l'un des chariots roulants (5) du premier arceau déplaçable (7) est un caténaire disposé sur le rail de roulement correspondant.

16. Capote repliable selon la revendication 16 *caractérisé en ce que* l'alimentation en énergie du moteur de commande (17) constitué d'un moteur électrique est un conducteur électrique isolé, fixé sur le rail de roulement par collage ou un autre moyen isolant.

Figur 1

Figur 2

EP 0 305 636 B1

Figur 4

Figur 5

5

~28

10

~28

26

11

25

2

25

2

Figur 6

26

10

27

11    25

2

Figur 3

21

10

2    11

22

20

FIG. 7